# EUROPEAN PATENT SPECIFICATION

(11) **EP 0 528 478 B1**
(45) Date of publication and mention of the grant of the patent: **29.05.1996**
(21) Application number: 92202401.3
(22) Date of filing: 03.08.1992
(51) Int. Cl.: B25F 5/00, B60L 11/18, H01M 2/10

(54) **Cordless power tool**
Netzunabhängiges Kraftbetriebenes Werkzeug
Outil motorisé sans fil

(30) Priority: 09.08.1991 US 743110
(43) Date of publication of application: 24.02.1993
(73) Proprietor: SKIL NEDERLAND B.V., NL-4825 BD Breda (NL)
(72) Inventor: Betz, Steven C., Clarendon Hills, Illinois 60514 (US)
(74) Representative: Hoorweg, Petrus Nicolaas

(56) References cited:
- DE-A- 3 839 840
- GB-A- 2 226 716
- US-A- 3 301 627
- US-A- 4 779 687
- US-A- 4 788 480

## Description

### FIELD OF THE INVENTION

The present invention relates to portable power tools in general and specifically to a portable power tool that uses rechargeable battery packs and that may use one or two battery packs for operating the tool in two different power modes.

### BACKGROUND OF THE INVENTION

The invention relates to a portable electric hand tool comprising:
a body portion having a tool-receiving end;
a motor mechanically coupled to said tool-receiving end for actuating said tool;
first and second battery-receiving chambers in said body portion;
terminals at one end- of said chambers for electrically contacting the positive and negative terminals of a battery inserted in each of said chambers; and
switch means in said body portion for selectively coupling said terminals to said motor.

Such a hand tool is disclosed in US-A-4,779,687.

Cordless battery operated portable power tools are well known in the art. Generally speaking, these tools are of a variety of different types such as hand drills, screwdrivers, jigsaws and the like. Because of the different tasks that must be performed, the tools must be capable of operating with low power requirements and higher power requirements. Generally speaking, in the prior art, a tool is sized to have a particular rated battery pack inserted therein. If the task to be performed is a light task, a light tool having a small rated battery pack can be utilized. If the task requires a heavy duty power requirement, a larger tool with a larger battery pack is utilized.

There are tools which utilize a battery pack that has a plurality of batteries within it and that has a positive terminal, a negative terminal and a tap terminal to provide an intermediate voltage. The user-operated switch on the tool can, in a first position, connect either between the tap terminal and the negative terminal to provide a first voltage to operate the tool in a first power mode and also, in a second position, the switch can connect the positive terminal through the motor to the negative terminal, thus providing a second power mode with a greater power rating to the tool. Such a battery pack is rechargeable. It will be understood, however, that the amount of power available is limited by the number of batteries in the rechargeable battery pack. If a task requires a greater amount of power, a larger tool with a larger battery pack must be used. This is an obvious disadvantage since the small, nonprofessional, commercial user is prohibited financially from having a number of such tools of variable size available because the user must not only have a plurality of tools, but also a plurality of different size rechargeable battery packs and a plurality of chargers for charging the different size batteries. These chargers and portable battery packs are very expensive and thus it is prohibitive for the nonprofessional, commercial user to have the necessary tools for wide power variation requirements.

The present invention overcomes the disadvantages of the prior art by providing a tool which can operate on one or two identical battery packs to obtain a first power level use with one battery and a second power level use having twice the power with two battery packs. Each tool has first and second battery-receiving chambers in a body portion. Contacts at one end of the chambers electrically connect to the positive and negative terminals of a battery inserted in each of the chambers. A switch device, usually a trigger-like switch that can be moved from a rest position to first and second operating positions, selectively couples the contacts to the motor such that in a first position of the switch the terminals of one battery are coupled to the motor and in a second position of the switch the terminals of both batteries are coupled to the motor in electrical series such that the tool can be operated in two different power modes such as at different speeds or with different torques.

It is noticed that GB-A-2,226,716 discloses a hand tool being simply a hand tool with two batteries. When either of the batteries therein goes below a critical limit, the tool is shut down.

The battery receiving chambers according to the invention are designed with identical unsymmetrical shapes that are rotated 180° with respect to each other and the first and second battery packs are also identical in construction having identical nonsymmetrical shapes that match the nonsymmetrical shapes of the battery-receiving chambers. Thus the batteries can be inserted in the chambers in only one position for proper electrical connections to the terminals.

Thus it is an object to provide an improved portable hand tool which provides the capability of combining the available power of two lesser battery packs, which can each be used individually in this and other tools.

It is also an object of the present invention to provide an improved portable electric hand tool that utilizes two battery packs instead of one and which has means for selectively operating a tool under the power from one battery pack alone or both battery packs in series.

### SUMMARY OF THE INVENTION

Thus the present invention relates to an improved portable electric hand tool comprising a body portion having a tool-receiving end, a motor mechanically coupled to the tool-receiving end for actuating the tool, first and second battery-receiving chambers in the body portion, contacts at one end of the chambers for electrically contacting the positive and negative terminals of a battery inserted in each of the chambers, and a switching means selectively coupling the terminals to the motor such that in a first position of the switch, the terminals of one battery are coupled to the motor and in a second position of the switch, the terminals of both batteries are coupled to the motor in electrical series whereby the tool can be operated in two different power modes such as different speeds.

### BRIEF DESCRIPTION OF THE DRAWINGS

These and other objects of the present invention will be more fully understood in conjunction with the accompanying drawings in which like numbers indicate like components and in which:
FIG. 1 is a side view of a prior art portable electric hand tool that utilizes a single battery pack;
FIG. 2 is a side view of the improved portable electric hand tool of the present invention that utilizes two battery packs;
FIG. 3 is a bottom view of the two battery packs inserted in battery-receiving chambers in the hand tool;
FIG. 4 is a top view of a battery contact mounting board that is positioned at one end of the chambers for electrically contacting the positive and negative terminals of a battery inserted in each of the chambers;
FIG. 5 is a perspective view of the bottom side of the terminal board with the electrical connections attached thereto; and
FIG. 6 is a schematic electrical circuit diagram for connecting the mounting board contacts to the motor through a switch for selecting first and second power requirements.

### DETAILED DESCRIPTION OF THE DRAWINGS

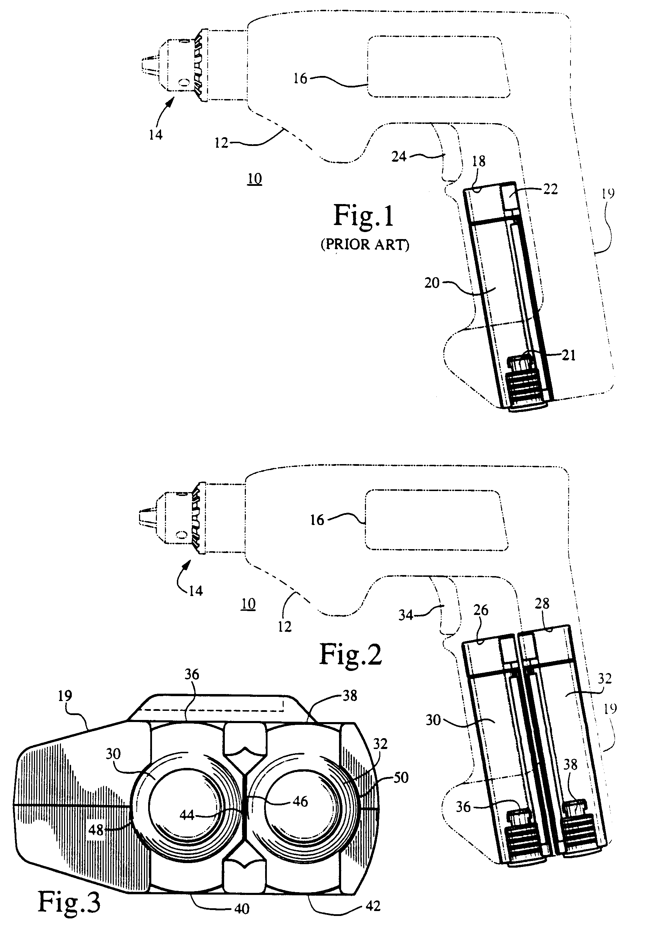

FIG. 1 is a side view of a typical illustration of a prior art portable electric hand tool that uses only one battery. The tool is designated generally by the numeral 10 and is indicated to be an electric drill although such tool is shown for purposes of explanation only and could be any other type of power tool such as a screwdriver, jigsaw or the like. As can be seen in FIG. 1, the prior art portable electric hand tool 10 has a body portion 12 and a tool-receiving end 14. A motor, represented by phantom lines 16, is connected in a well-known manner through gear arrangements for actuating a tool in the tool-receiving end 14. A chamber 18 in a portion of the tool such as handle 19 receives a rechargeable battery pack 20. Battery 20 has a negative terminal 22 and a positive terminal not shown in FIG. 1. The battery 20 is locked into the chamber 18 by any well-known means but in the preferred embodiment utilizes novel resilient latching arms 21 which are T-shaped on the upper portion and which can be pressed inwardly when the battery is inserted in chamber 18 and when released the T-shaped members engage corresponding recesses in the tool housing handle 19 to lock battery 20 in the chamber 18. As is well known in the prior art, a switch operating mechanism 24 which, as illustrated in FIG. 1, is in the shape of a trigger, is movable between first and second positions to obtain operation of the tool 10 in first and second power modes. Typically speaking, the battery 20 has a third tap terminal thereon, not shown, which provides an intermediate voltage between that provided by the positive and negative terminals. In the first position of switch 24, the tap terminal and the negative terminal are coupled to the motor 16 to provide a first power mode of operation such as a first speed. When the switch is fully depressed to a second position, the full power provided between the positive and negative terminals of the battery is applied to the motor for the second power mode of operation such as a higher speed.

FIG. 2 is a side view of the improved portable electric hand tool of the present invention. As can be seen in FIG. 2, two batteries 30 and 32 are inserted in the handle 19 of tool 10 in which two battery-receiving chambers 26 and 28 are provided. As can be seen in FIG. 3, which is a bottom view of handle 19 illustrating the two batteries 30 and 32 in side-by-side relationship, battery 30 has a flat side 44 and a rounded side 48. In addition, battery 32 has a flat side 46 and a rounded side 50. This nonsymmetrical shape of both the batteries and the chambers in which they are placed prohibits the batteries from being inadvertently inserted in the chambers in the wrong position. If either of the batteries 30 and 32 is reversed from the position shown and attempted to be placed in the chambers 26 and 28, the flat-sided portions 44 and 46 would engage the portion of handle 19 where the arcuate surfaces 48 and 50 are located and thus would not allow the batteries to be inserted in the chambers 26 and 28. Battery 30 has latching devices 36 and 40 for holding the battery 30 in the chamber 26 while battery 32 has latching members 38 and 42 to hold battery 32 in chamber 28. The switch means 34 in FIG. 2 selectively couples the battery terminals to the motor such that in a first position of the switch the terminals of one battery are coupled to the motor and in a second position of the switch the terminals of both batteries are coupled to the motor in electrical series so the tool can be operated in two different power modes such as different speeds. In this case, however, as compared to the prior art, much more power is available to the tool since two batteries obviously double the power of one.

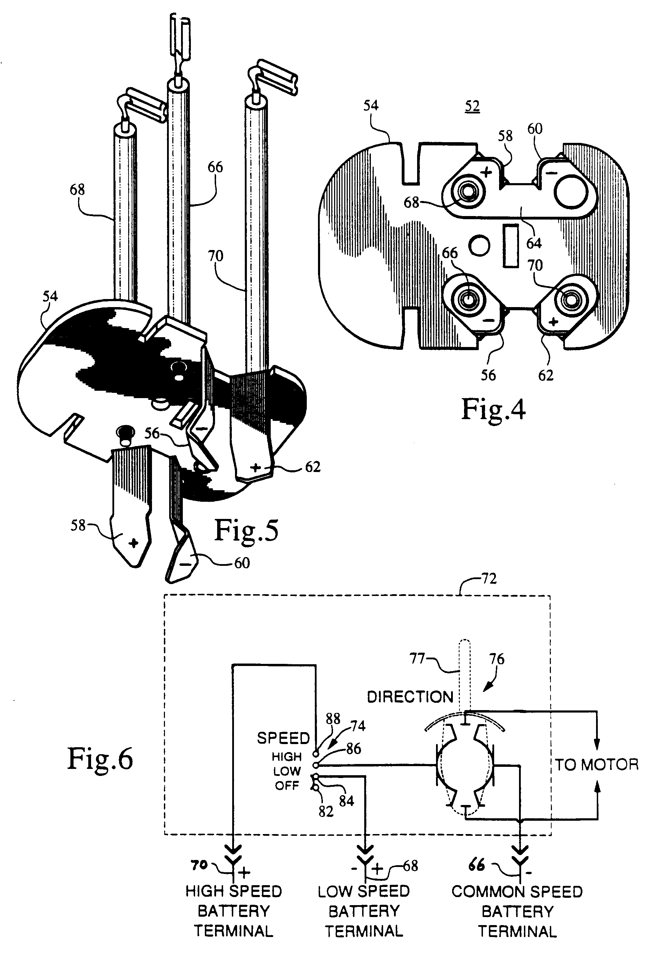

FIG. 4 is a top view of a terminal board 54 located at the inner end of the chambers 26 and 28 for electrically contacting the positive and negative terminals of the batteries inserted in the chambers 26 and 28. As can be seen in FIG. 4, mounting board 54 is attached to the tool body portion in the inner end of the chamber 26, 28 in any well-known manner such as by screws, plastic slots in the tool handle and the like. Mounting board 54 has first and second electrical contacts 56 and 58 thereon in operative relationship with the first chamber 26 such that a battery inserted in chamber 26 has its negative terminal electrically connected to the first contact 56 and its positive terminal electrically connected to the second contact 58. Third electrical contact 60 and fourth electrical contact 62 are also mounted on the board 54 in spaced relationship with the first and second contacts 56 and 58 and in operative relationship with the second chamber 28 such that a battery inserted in the second chamber 28 has its negative terminal electrically connected to the third contact 60 and its positive terminal electrically connected to the fourth contact 62. The second and third contacts 58 and 60 are electrically connected to one another by conductor 64 to form a common terminal. FIG. 5 is a perspective view of the mounting board 54 shown in FIG. 4 and illustrates the battery connecting terminals 56, 58, 60 and 62 as well as corresponding electrical leads 66, 68 and 70 which are coupled to the electrical circuit including the switch for operating the motor.

The circuit shown for operating the motor is shown in FIG. 6 in a schematic diagram 72. The three electrical conductors or leads 66, 68 and 70 shown in FIGS. 4 and 5 are illustrated in FIG. 6 being connected to circuit 72. Conductor 70 is the high speed battery terminal, conductor 68 is the low speed battery terminal and conductor 66 is the common speed battery terminal. As can be seen in FIG. 6, a switch 74, which corresponds to trigger switch 34 in FIG. 2, has first, second, third and fourth terminals 82, 84, 86 and 88, respectively. The first and second terminals 82 and 84 provide an OFF position for the tool. The second and third terminals 84 and 86 couple the low speed battery terminal 68 through a motor rotation direction switch 76 to the motor 16 and back to the common speed battery terminal 66. This circuit enables a first power mode of operation of the tool utilizing only one of the batteries. The third and fourth terminals 86 and 88 couple the high speed battery conductor 70 through the directional switch 76, the motor 16 and common battery terminal 66. Since the battery terminals 58 and 60 are connected together by electrical conductor 64 shown in FIG. 4, the two batteries 30 and 32 are coupled in series and the power from both batteries is thus applied to the motor in the second power mode of operation. If the power modes were designated high and low speeds, the switch 74 would provide an off position, a low speed position and a high speed position. Directional switch 76 in FIG. 6 is of a type well known in the art and has a handle 77 which when moved in one direction couples the battery contacts to the motor 16 for providing current therethrough in a first direction and when moved in the opposite position couples the battery contacts to the motor 16 to provide current flow through the motor in the opposite direction, thus reversing the direction of rotation of the motor. Directional switch 76 also has a neutral position (in which it is shown in schematic 72) which does not permit the motor to turn.

Thus in FIG. 6, conductor 68 which is coupled to the common terminals 58 and 60 through link 64 in FIG. 4, is coupled to the second switch terminal 84. The motor 16 is coupled to the third switch terminal 86 through direction switch 76 and is also coupled to the fourth battery terminal 62 through conductor 66. When the movable switch 74 selectively electrically connects the second and third switch terminals 84 and 86, a battery circuit is completed for one battery from the common second and third battery contacts 58 and 60 and terminal 68 through the switch terminals 84 and 86 and the motor to the first battery contact 56 that is coupled to conductor 66. Thus the tool is operated in the first power mode with only one battery being coupled thereto. When the movable switch 74 selectively electrically connects the third and fourth switch terminals 86 and 88, the fourth battery contact 62 is coupled through conductor 70 to switch terminal 88 and through the switch to switch terminal 86, the motor 16 to the first battery contact 56 and conductor 66 for operating the tool in the second power mode. In that mode, since the common terminals 58 and 60 are coupled together with conductor 64, it can be seen that power flows from terminal 56 through the first battery to terminal 58 and 60 and through the second battery to terminal 62, thus providing a two-battery series circuit for providing maximum power to the tool.

Again, it can be seen in FIG. 3 that the first and second batteries 36 and 38 are identical in construction and have nonsymmetrical shapes that match the nonsymmetrical shape of the battery-receiving chambers 26 and 28.

Thus the novel portable electrical hand tool of the present invention allows a nonprofessional, commercial user to have a tool that can operate in a first power mode with a first rechargeable battery pack and which will allow the user to add a second rechargeable battery pack to the tool for higher power usage without the requirement of buying a separate tool that utilizes a larger battery pack and requires a separate battery charger for the larger battery pack. The present invention simply allows two identical rechargeable battery packs to be inserted in the tool and either one or both of the batteries used as desired.

With the present invention, the user need buy only one battery if it is desired to operate the tool in only the low speed or the first power mode. In that case, if the battery is placed in battery-receiving chamber 28, battery contacts 60 and 62 will be engaged and terminals 56 and 58 will be coupled to the motor and switch 74. Thus, when the switch is moved to the first position to connect switch terminals 84 and 86, the motor will operate as it normally operates in the low power mode. If the battery is inadvertently inserted in chamber 26, the motor will not operate since, when the switch terminals 84 and 86 are interconnected, there is no connection to battery contact 62 and when the switch connections are between switch terminals 86 and 88, there is no connection to battery contact 60. Thus the motor will not operate.

While the invention has been described in connection with a preferred embodiment, it is not intended to limit the scope of the invention to the particular form set forth, but, on the contrary, it is intended to cover such alternatives, modifications, and equivalents as may be included within the scope of the invention as defined in the appended claims.

## Claims

1. Portable electric hand tool comprising:
a body portion (12) having a tool-receiving end (14);
a motor (16) mechanically coupled to said tool-receiving end for actuating said tool;
first and second battery-receiving chambers (26, 28) in said body portion;
terminals at one end of said chambers for electrically contacting the positive and negative terminals of a battery (30, 32) inserted in each of said chambers; and
switch means (24) in said body portion for selectively coupling said terminals to said motor, **characterized in that** said switch means are embodied such that in a first position of said switch, said terminals of one battery are coupled to said motor and in a second position of said switch, said terminals of both batteries (30, 32) are coupled to said motor in electrical series whereby said tool can be operated in two different power modes such as different speeds.

2. Electric hand tool as in claim 1, wherein
said chambers (26, 28) are side by side in said body portion; **characterized in that**
said chambers have identical unsymmetrical shapes that are rotated 180° in respect to each other such that a battery can be inserted in each chamber in only one orientation.

3. Electric hand tool as in claim 2, wherein said terminals comprises:
a mounting board (54) attached to said tool body portion at said one end of said chambers (26, 28);
first and second electrical contacts (56, 58) on said mounting board in operative relationship with said first chamber (26) such that a battery inserted in said first chamber has its negative terminal connected to said first contact (56) and its positive terminal connected to said second contact (58); and
third and fourth electrical contacts (60, 62) on said mounting board in spaced relationship with said first and second contacts and in operative relationship with said second chamber (28) such that a battery inserted in said second chamber has its negative terminal connected to said third contact (60) and its positive terminal connected to said fourth contact (62), said second and third contacts being electrically connected to one another to form a common terminal.

4. Electric hand tool as in claim 3, wherein said switch means comprises:
first, second, third and fourth terminals (82, 84, 86, 88);
said first and second terminals (82, 84) being the off position;
said second and third terminals (84, 86) being the first power mode; and
said third and fourth terminals (86, 88) being the second power mode.

5. Electric hand tool as in claim 4 further comprising:
means coupling said second and third battery contacts (58, 60) to said second switch terminal (84);
means coupling said motor to said third switch terminal (86) and said first battery contact (56); and
said switch means (74) being movable for selectively electrically connecting said second and third switch terminals (84, 86) to complete a one-battery circuit from the second battery contact through said second and third switch terminals and said motor through said first battery contact (56) for operating said tool in said first power mode.

6. Portable electric hand tool as in claim 5 further comprising:
means coupling said fourth battery contact (62) to said fourth switch terminal (88); and
said movable switch means (74) selectively electrically connecting said third and fourth switch terminals (86, 88) to complete a two-battery series circuit from the fourth battery contact (62) through said third and fourth switch terminals and said motor to said first battery contact (56) for operating said tool in said second power mode.

7. Portable electric hand tool as in claim 6 further including:
first and second batteries (30, 32) for insertion in said battery-receiving chambers (26, 28); and
said first and second batteries being identical in construction and having nonsymmetrical shapes that match the nonsymmetrical shapes of said battery-receiving chambers.

8. Portable electric hand tool as in claim 7, wherein said first and second batteries (30, 32) are rechargeable battery packs.

## Patentansprüche

1. Tragbares elektrisches Handwerkzeug mit:
einem Gehäuseabschnitt (12) mit einem Werkzeugaufnahmeende (14);
eine mechanisch mit dem Werkzeugaufnahmeende gekoppelten Motor (16) zum Betätigen des Werkzeuges;
einer erste und einer zweiten Batterieaufnahmekammer (26, 28) in dem Gehäuseabschnitt;
Anschlüssen an einem Ende der Kammern zum elektrischen Kontaktieren des positiven und negativen Anschlusses einer Batterie (30, 32), die jeweils in eine der Kammern eingesteckt ist; und
Schaltmitteln (24) in dem Gehäuseabschnitt zum selektiven Verbinden der Anschlüsse mit dem Motor;
dadurch gekennzeichnet, daß
die Schaltmittel derart ausgeführt sind, daß in einer ersten Position des Schalters die Anschlüsse einer Batterie mit dem Motor verbunden sind und in einer zweiten Position des Schalters die Anschlüsse beider Batterien (30, 32) in elektrischer Reihe mit dem Motor verbunden sind, wodurch das Werkzeug in zwei verschiedenen Leistungsstufen wie verschiedene Geschwindigkeiten betrieben werden kann.

2. Elektrisches Handwerkzeug nach Anspruch 1,
bei dem die Kammern (26, 28) in dem Gehäuseabschnitt nebeneinander sind;
dadurch gekennzeichnet, daß
die Kammern identische unsymmetrische Formen haben, die in Bezug zueinander um 180° derart gedreht sind, daß eine Batterie in jede Kammer nur in einer Orientierung eingesteckt werden kann.

3. Elektrisches Handwerkzeug nach Anspruch 2,
bei dem die Anschlüsse aufweisen:
eine Anbringungsplatte (54), die an dem Werkzeuggehäuseabschnitt an dem einen Ende der Kammern (26, 28) angebracht ist;
einen ersten und einen zweiten elektrischen Kontakt (56, 58) auf der Anbringungsplatte in betriebsmäßiger Beziehung zu der ersten Kammer (26) derart, daß eine in die erste Kammer eingesteckte Batterie ihren negativen Anschluß mit dem ersten Kontakt (56) verbunden hat und ihren positiven Anschluß mit dem zweiten Kontakt (58) verbunden hat;
einem dritten und einem vierten elektrischen Kontakt (60, 62) auf der Anbringungsplatte in einem Abstand zu dem ersten und Zweiten Kontakt und in betriebsmäßiger Beziehung zu der zweiten Kammer (28) derart, daß eine in die zweite Kammer eingesteckte Batterie ihren negativen Anschluß mit dem dritten Kontakt (60) verbunden hat und ihren positiven Anschluß mit dem vierten Kontakt (62) verbunden hat, wobei der zweite und dritte Kontakt elektrisch miteinander zum Bilden eines gemeinsamen Abschlusses verbunden sind.

4. Elektrisches Handwerk nach Anspruch 3,
bei dem das Schaltmittel aufweist:
einen ersten, einen zweiten, einen dritten und einen vierten Anschluß (82, 84, 86, 88);
wobei der erste und zweite Anschluß (82, 84) die Aus-Position darstellen;
der zweite und dritte Anschluß (84, 86) die erste Leistungsstufe darstellen; und
der dritte und vierte Anschluß (86, 88) die zweite Leistungsstufe darstellen.

5. Elektrisches Handwerkzeug nach Anspruch 4, weiter mit:
einem Mittel, das den zweiten und dritten Batteriekontakt (58, 60) mit dem zweiten Schalteranschluß (84) verbindet;
einem Mittel, das den Motor mit dem dritten Schalteranschluß (86) und dem ersten Batteriekontakt (56) verbindet; und
wobei das Schaltmittel (74) bewegbar ist zum selektiven elektrischen Verbinden des zweiten und dritten Schalteranschlusses (84, 86) zum Vervollständigen einer Ein-Batterieschaltung von dem zweiten Batteriekontakt durch den zweiten und dritten Schalteranschluß und den Motor durch den ersten Batteriekontakt (56) zum Betreiben des Werkzeuges in der ersten Leistungsstufe.

6. Tragbares elektrisches Handwerkzeug nach Anspruch 5, weiter mit:
einem Mittel, das den vierten Batteriekontakt (62) mit dem vierten Schalteranschluß (88) verbindet; und
wobei das bewegbare Schaltermittel (74) selektiv elektrisch den dritten und vierten Schalteranschluß (86, 88) verbindet zum komplettieren einer Zwei-Batteriereihenschaltung von dem vierten Batteriekontakt (62) durch den dritten und vierten Schalteranschluß und den Motor zu dem ersten Batteriekontakt (56) zum Betreiben des Werkzeuges in der zweiten Leistungsstufe.

7. Tragbares elektrisches Handwerkzeug nach Anspruch 6, weiter mit:
einer ersten und einer zweiten Batterie (30, 32) zum Einstecken in die Batterieaufnahmekammern (26, 28); und
wobei die erste und zweite Batterie identisch in der Konstruktion sind und nicht-symmetrische Formen aufweisen, die zu den nicht-symmetrischen Formen der Batterieaufnahmekammern passen.

8. Tragbares elektrisches Handwerkzeug nach Anspruch 7, bei dem die erste und zweite Batterie (30, 32) wiederaufladbare Batteriesäulen sind.

## Revendications

1. Outil à main électrique portable comprenant :
une partie formant corps (12) présentant une extrémité (14) destinée à recevoir l'outil ;
un moteur (16) couplé de façon mécanique à l'extrémité destinée à recevoir l'outil afin d'actionner l'outil ;
des premier et deuxième logements (26, 28) recevant la batterie, prévus dans la partie formant corps ;
des bornes à une extrémité des logements, afin d'établir un contact électrique avec les bornes positive et négative d'une batterie (30, 32) insérée dans chacun des logements ; et
des moyens de commutation (24) prévus dans la partie formant corps pour coupler de façon sélective les bornes au moteur, caractérisé en ce que les moyens de commutation sont conçus de telle sorte que, dans une première position de l'interrupteur, les bornes d'une batterie sont couplées au moteur et, dans une deuxième position de l'interrupteur, les bornes des deux batteries (30, 32) sont couplées au moteur selon un montage électrique en série, de telle sorte que l'outil puisse fonctionner dans deux modes de puissance différents, comme à différentes vitesses.

2. Outil à main électrique selon la revendication 1, dans lequel les logements (26, 28) se situent côte-à-côte dans la partie formant corps, caractérisé en ce que les logements présentent des formes asymétriques identiques qui sont tournées à 180° l'une par rapport à l'autre, de telle sorte qu'une batterie puisse être insérée dans chaque logement selon une seule orientation.

3. Outil à main électrique selon la revendication 2, dans lequel les bornes comprennent :
une plaque de montage (54) fixée à la partie formant corps de l'outil à l'une des extrémités des logements (26, 28) ;
des premier et deuxième contacts électriques (56, 58), présents sur la plaque de montage, qui sont en liaison opératoire avec le premier logement (26) de telle sorte qu'une batterie insérée dans le premier logement a sa borne négative reliée au premier contact (56), et sa borne positive reliée au deuxième contact (58) ; et
des troisième et quatrième contacts électriques (60, 62) présents sur la plaque de montage, de façon espacée par rapport aux premier et deuxième contacts, et en liaison opératoire avec le deuxième logement (28), de telle sorte qu'une batterie insérée dans le deuxième logement a sa borne négative reliée au troisième contact (60) et sa borne positive reliée au quatrième contact (62), les deuxième et troisième contacts étant reliés de façon électrique l'un à l'autre afin de constituer une borne commune.

4. Outil à main électrique selon la revendication 3, dans lequel les moyens de commutation comprennent :
des première, deuxième, troisième et quatrième bornes (82, 84, 86, 88) ;
la première et la deuxième borne (82, 84) constituant la position d'arrêt ;
la deuxième et la troisième borne (84, 86) constituant le premier mode de puissance ; et
la troisième et la quatrième borne (86, 88) constituant le deuxième mode de puissance.

5. Outil à main électrique selon la revendication 4, comprenant, en outre :
des moyens couplant les deuxième et troisième contacts de batterie (58, 60) avec la deuxième borne d'interrupteur (84) ;
des moyens couplant le moteur à la troisième borne d'interrupteur (86) et au premier contact de batterie (56) ; et
les moyens de commutation (74) pouvant se déplacer pour effectuer une liaison électrique sélective entre les deuxième et troisième bornes d'interrupteur (84, 86), afin de constituer un circuit à une seule batterie s'étendant entre le deuxième contact de batterie et les deuxième et troisième bornes d'interrupteur, et entre le moteur et le premier contact de batterie (56), afin de faire fonctionner l'outil dans le premier mode de puissance.

6. Outil à main électrique portable selon la revendication 5, comprenant, en outre :
des moyens couplant le quatrième contact de batterie (62) à la quatrième borne d'interrupteur (88) ; et
lesdits moyens de commutation mobiles (74) établissant une liaison électrique sélective entre les troisième et quatrième bornes d'interrupteur (86, 88) pour constituer un circuit à deux batteries en série entre le quatrième contact de batterie (62) et les troisième et quatrième bornes d'interrupteur, et entre le moteur et le premier contact de batterie (56), afin de faire fonctionner l'outil dans le deuxième mode de puissance.

7. Outil à main électrique portable selon la revendication 6, comprenant, en outre :
des première et deuxième batteries (30, 32) destinées à être insérées dans les logements (26, 28) recevant les batteries ; et
les première et deuxième batteries étant de construction identique et présentant des formes asymétriques qui correspondent aux formes asymétriques des logements recevant les batteries.

8. Outil à main électrique portable selon la revendication 7, dans lequel les première et deuxième batteries (30, 32) sont des blocs batteries rechargeables.
